# FASCICULE DE BREVET EUROPEEN

(11) **EP 1 953 373 B1**
(45) Date de publication et mention de la délivrance du brevet: **18.11.2009**
(21) Numéro de dépôt: 08150421.9
(22) Date de dépôt: 18.01.2008
(51) Int. Cl.: F02D 41/22, F02M 59/38, F02D 41/30, F02D 41/38, F02M 63/02, F02M 65/00, F02M 63/00

(54) **Processus de conception d'un élément organique d'un véhicule automobile et procédé de supervision du fonctionnement de cet élément organique**
Entwicklungsprozess eines organischen Elements eines Kraftfahrzeugs und Funktionsüberwachungsverfahren dieses organischen Elements
Process for designing an organic element of an automobile and method for supervising the operation of this organic element

(30) Priorité: 24.01.2007 FR 0752856
(43) Date de publication de la demande: 06.08.2008
(73) Titulaire: PEUGEOT CITROËN AUTOMOBILES S.A., 78140 Vélizy Villacoublay (FR)
(72) Inventeur: Miquel, François, 8006 Zürich (CH)
(74) Mandataire: Ménès, Catherine

(56) Documents cités:
- EP-A- 0 507 500
- FR-A- 2 847 942

## Description

### Domaine technique

La présente invention concerne a trait généralement à la conception de véhicules automobiles et plus précisément à la conception d'organes, notamment d'organes du groupe motopropulseur, ou de sous éléments de tels organes.

### Etat de la technique antérieure

Dans un véhicule automobile, de nombreux éléments sont soumis à une usure dont l'intensité dépend essentiellement du type de roulage auquel le véhicule est soumis. Ainsi, certains organes seront plus ou moins sollicités en fonction du style de conduite d'un conducteur et, de façon très largement associée, des types de routes les plus fréquemment empruntées par le véhicule, et ceci indépendamment de la distance effectivement parcourue par le véhicule. Ce phénomène est très largement connu intuitivement par la plupart des acheteurs de véhicule d'occasion qui tentent généralement d'apprécier les styles de conduites des précédemment détenteurs d'un véhicule, et ainsi privilégient par exemple les véhicules dits de première main pour lesquels cette appréciation est supposée plus exacte.

Côté constructeur automobile, pour assurer certains niveaux de performance, comme par exemple une absence d'incident bloquant le véhicule pendant la période de garantie ou encore la non nécessité de remplacer un moteur pendant toute la durée de vie probable d'un véhicule, il est souvent nécessaire d'adopter une politique du pire, c'est-à-dire de concevoir certains organes pour le « pire » des conducteurs (voir par exemple le document FR-A-2 847 942).

A l'évidence, ceci conduit à sur-dimensionner nombre d'équipements, et donc à renchérir les coûts, ceci pour un bénéfice le plus souvent nul pour les automobilistes ayant un style non atypique. A noter que sur l'ensemble des pièces constituant les organes, le bénéfice est en fait au plus partiel pour tous les automobilistes donc nul pour certains des éléments car certains d'entre eux sont par exemple conçus pour un style de conduite extrêmement agressif et d'autres pour un style excessivement conservateur - et qu'un même conducteur n'a pas à la fois les deux styles.

La présente invention a pour but d'améliorer les processus de caractérisation des spécifications d'organes ou d'éléments constitutionnels d'organes, en particulier d'organes moteurs, pour satisfaire les exigences au juste besoin.

Selon l'invention, le processus de conception d'un élément organique d'un véhicule automobile consiste à déterminer des conditions normales de fonctionnement de cet élément, sélectionner un élément organique dont les spécifications sont telles que cet élément est susceptible de fonctionner de façon satisfaisante dans ces conditions normales pendant au moins une période nominale, déterminer des conditions extrêmes auxquelles cet élément pourra être soumis lors de la vie du véhicule, déterminer une durée minimale pendant laquelle l'élément répondant aux spécifications sélectionnées peut opérer sans dégradation dans ces conditions extrêmes, estimer la période cumulée pendant laquelle l'élément pourra effectivement être soumis à ces conditions extrêmes pendant cette période nominale, et réitérer le processus tant que l'écart entre la période cumulée et la durée minimale excède un seuil prédéfini.

Il s'agit donc essentiellement d'un processus itératif supposant que l'élément soit testé dans des doubles conditions, en admettant que de toute façon, dans les conditions extrêmes, l'élément serait nécessairement défaillant. Ce processus est mené à bien de façon à éviter deux écueils : la définition de spécifications trop étroites, plus sévères que celles rencontrées dans la pratique et la définition de spécifications trop permissives qui seraient susceptibles de générer des pannes sur un nombre important de véhicule.

Une condition extrême sera par exemple considérée comme telle que si elle n'est rencontrée qu'au plus pendant une période cumulée inférieure à 5% du nombre d'heures de roulage prévu pour l'organe considéré du véhicule (durée de vie par exemple du moteur donnée en nombre d'heures de roulage) et/ou si elles ne sont rencontrées que par une petite fraction seulement des conducteurs, considérés typiquement comme des conducteurs « sévères »), et qui vont représenter par exemple au plus 1% de la population totale des conducteurs susceptibles d'utiliser le véhicule.

Le processus selon l'invention suppose donc une prise de risque relativement importante. Pour minimiser les conséquences négatives qui pourraient découler de cette prise de risque, il est avantageux d'intégrer celui-ci par exemple au niveau du contrôle moteur. Pour cela, le fonctionnement d'un élément organique dont les spécifications ont été définies selon le processus défini précédemment est avantageusement supervisé via un processus comportant une étape de cumul des périodes pendant lesquelles on opère effectivement dans des conditions extrêmes ; une étape de comparaison entre cette période cumulée et la durée minimale et l'émission d'un signal lorsque la période cumulée dépasse une fraction prédéfinie de la durée minimale. Ce signal peut par exemple être interprété par le contrôle moteur comme un ordre de passage à un mode dégradé n'autorisant plus le passage dans les conditions extrêmes, au prix alors d'une détérioration des performances du véhicule, mais prix qui ne sera payé d'une part que pour une petite fraction des automobilistes et d'autre part que pour ceux dont le véhicule (ou plus exactement l'organe concerné, à l'exemple du moteur) affiche déjà un kilométrage élevé.

Selon les stratégies retenues par le constructeur, ce passage en mode dégradé pourra être simplement mémorisé par l'unité centrale associée au véhicule, et l'information mémorisée sera alors lue lors d'un entretien du véhicule, avec éventuellement une recommandation de remplacement de l'élément sous performant, et/ou présenté à l'automobiliste via par exemple un témoin lumineux du tableau de bord.

Pour mieux comprendre l'intérêt de l'invention, considérons par exemple la pompe d'injection d'un moteur diesel moderne dont les injecteurs sont associés par une rampe commune (système plus communément connu sous la dénomination anglo-saxonne de Common Rail). Cette pompe est à la fois un élément clef du moteur, et tout disfonctionnement de la pompe peut entrainer l'immobilisation du véhicule, et un élément particulièrement onéreux.

En déclinant un cahier des charges, pour l'obtention de bonnes prestations techniques avec une bonne fiabilité, il a été estimé un besoin d'une pompe capable de fonctionner avec une pression de 1800 bars. Une pompe plus traditionnelle, avec une pression maximale nominale de 1600 bars ne permet pas l'obtention des performances souhaitées.

Pour autant, les auteurs de la présente invention ont estimés que ce choix d'une pompe dite 1600 bars pouvait rester fiable à 1800 bars mais sur une période limitée.

Pour vérifier qu'un tel choix - dont on conçoit immédiatement les avantages financiers - ne se ferait pas au détriment de la qualité, il a été défini le profil de mission suivant.

Pour cela on choisit une application de segment équivalent à celle qu'on souhaite mettre en série et on détermine l'histogramme de durée du couple moteur et du régime moteur engagé à la fin de l'espérance de vie du moteur, via une mesure en continu du régime moteur et du couple à la roue.

Les données sont obtenues par exemple en compilant les roulages d'un certain nombre de chauffeurs jugés représentatif de la population des chauffeurs sur le segment considéré, sur un certain nombre de profils de roulage. Pour fixer les idées, il est supposer les tests peuvent être ainsi effectués à l'aide de 5 chauffeurs, en considérant 4 types de roulage (ville, route, autoroute, montagne).

Les données acquises sur un kilométrage relativement réduit sont ensuite extrapolées pour obtenir un roulage correspondant au kilométrage total visé pour le moteur considéré, et une population globale de n conducteurs. Ces données sont avantageusement reportées en temps passé par plage (couple-régime) en fonction du rapport de boite de vitesse engagé.

Pour chacune de ces plages, dans le cas d'une pompe d'injection pour un système à rampe commune, on connaît la pression d'injection que l'on souhaite calibrer grâce à une cartographie de pression rail déterminée lors de la pré-étude fonctionnelle au banc moteur.

A partir de ces données, il peut être estimé quel sera le temps passé dans la zone de régime / charge correspondante à une pression d'injection souhaitée supérieure à 1600 bars, ou le temps passé dans la zone de Vmax correspondant au point de puissance maxi nécessitant les 1800 bars.

Sur le profil de mission du véhicule testé de segment équivalent, on s'aperçoit ainsi que seule une petite partie des conducteurs parcourent la zone régime / charge correspondant à une pression d'injection supérieure à 1600 bars. On l'appelle la population des clients sévères.

La répartition en durée montre que 99% de ces clients sévères passent moins de 182h au-dessus de 1600 bars et 14h à 1800 bars (correspondant à la Vmax).

En prenant une marge, on propose donc de valider la pompe HP 1600 bars déjà en série à 1800 bars pendant 20h maxi et entre 1600 et 1800 bars pendant 200h maxi.

Les essais de validation montrent que la faisabilité est acquise et en conséquence il nous est possible de choisir la pompe HP 1600 bars déjà en série pour satisfaire tous nos besoins (prestations, qualité et coûts) moyennant l'intégration dans le contrôle moteur d'un compteur de temps passé en fonction de la pression d'injection, estimée par exemple de la pression mesurée par le capteur de pression présent dans la rampe commune de toute façon déjà présent.

Si la population de clients « sévères » est inférieure à 1 % de la population totale, on conclut ainsi que moins de un client sur 10000 ne sera un jour affecté par le choix d'une pompe à priori sous performante.

## Revendications

1. Processus de conception d'un élément organique d'un véhicule automobile consistant à déterminer des conditions normales de fonctionnement de cet élément, sélectionner un élément organique dont les spécifications sont telles que cet élément est susceptible de fonctionner de façon satisfaisante dans ces conditions normales pendant au moins une période nominale, déterminer des conditions extrêmes auxquelles cet élément pourra être soumis lors de la vie du véhicule, déterminer une durée minimale pendant laquelle l'élément répondant aux spécifications sélectionnées peut opérer sans dégradation dans ces conditions extrêmes, estimer la période cumulée pendant laquelle l'élément pourra effectivement être soumis à ces conditions extrêmes pendant cette période nominale, et réitérer le processus tant que l'écart entre la période cumulée et la durée minimale excède un seuil prédéfini.

2. Processus selon la revendication 1, **caractérisé en ce que** ledit élément organique est une pompe d'injection haute pression.

3. Processus selon la revendication 1, **caractérisé en ce que** les conditions extrêmes sont choisies telles qu'elles ne sont rencontrées que sur une période cumulée inférieure à 5% du nombre d'heures de roulage prévu pour l'organe considéré du véhicule.

4. Processus selon l'une des revendications précédentes, **caractérisée en ce que** les conditions extrêmes sont choisies telles qu'elles ne sont rencontrées que par une population représentant au plus 1 % des conducteurs.

5. Procédé de supervision du fonctionnement d'un élément organique dont les spécifications ont été définies selon le processus conforme à l'une quelconque des revendications précédentes, **caractérisé en ce qu'**il comporte le cumul des périodes pendant lesquelles ledit élément organique est effectivement soumis à des conditions extrêmes et la comparaison entre cette période cumulée et la durée minimale et l'émission d'un signal lorsque la période cumulée dépasse une fraction prédéfinie de la durée minimale.

6. Procédé selon la revendication 5, **caractérisé en ce que** le signal commande le fonctionnement de l'élément organique dans un mode dégradé interdisant une opération dans des conditions extrêmes.

## Claims

1. Process for designing an organic element of a motor vehicle consisting in determining normal operating conditions for this element, selecting an organic element the specifications of which are such that this element is capable of operating satisfactorily under these normal conditions for at least a nominal period of time, determining extreme conditions to which this element may be subjected during the life of the vehicle, determining a minimum time for which the element that meets the selected specifications can operate without becoming degraded under these extreme conditions, estimating the cumulative period during which the element may actually be subjected to these extreme conditions during this nominal period, and reiterating the process as long as the difference between the cumulative period and the minimum time exceeds a predefined threshold.

2. Process according to Claim 1, **characterized in that** the said organic element is a high pressure injection pump.

3. Process according to Claim 1, **characterized in that** the extreme conditions are chosen such that they are encountered only over a cumulative period of less than 5% of the total number of running hours that the relevant organ of the vehicle is intended to undergo.

4. Process according to one of the preceding claims, **characterized in that** the extreme conditions are chosen such that they are encountered only by a population representing at most 1% of drivers.

5. Method of supervising the operation of an organic element the specifications of which have been defined according to the process according to any one of the preceding claims, **characterized in that** it involves cumulating the periods during which the said organic element is actually subjected to extreme conditions and comparing this cumulative period with the minimum time and emitting a signal when the cumulative period exceeds a predefined fraction of the minimum time.

6. Method according to Claim 5, **characterized in that** the signal forces the organic element to operate in a degraded mode preventing it from operating under extreme conditions.

## Patentansprüche

1. Prozess zur Entwicklung eines organischen Elements eines Kraftfahrzeugs, umfassend Bestimmen von normalen Betriebsbedingungen dieses Elements, Wählen eines organischen Elements, dessen Spezifikationen derart sind, dass dieses Element unter diesen normalen Bedingungen während mindestens einer Nennzeitspanne zufriedenstellend funktionieren kann, Bestimmen von extremen Bedingungen, denen dieses Element während der Lebensdauer des Fahrzeugs unterworfen werden kann, Bestimmen einer minimalen Dauer, während der das Element, das auf die gewählten Spezifikationen reagiert, ohne Beeinträchtigung unter diesen extremen Bedingungen betrieben werden kann, Schätzen der kumulierten Zeitspanne, während der das Element während dieser Nennzeitspanne effektiv diesen extremen Bedingungen unterworfen werden kann, und Wiederholen des Prozesses, solange der Abstand zwischen der kumulierten Zeitspanne und der minimalen Dauer eine vordefinierte Schwelle überschreitet.

2. Prozess nach Anspruch 1, **dadurch gekennzeichnet, dass** das organische Element eine Hochdruckeinspritzpumpe ist.

3. Prozess nach Anspruch 1, **dadurch gekennzeichnet, dass** die extremen Bedingungen so gewählt sind, dass sie nur in einer kumulierten Zeitspanne unter 5% der Anzahl von Fahrstunden, die für das betreffende Glied des Fahrzeugs vorgesehen ist, angetroffen werden.

4. Prozess nach einem der vorhergehenden Ansprüche, **dadurch gekennzeichnet, dass** die extremen Bedingungen so gewählt sind, dass sie nur von einer Bevölkerung, die höchstens 1% der Fahrer darstellt, angetroffen werden.

5. Verfahren zur Überwachung des Betriebs eines organischen Elements, dessen Spezifikationen gemäß dem Prozess nach einem der vorhergehenden Ansprüche definiert worden sind, **dadurch gekennzeichnet, dass** es das Kumulieren von Zeitspannen, während der das organische Element effektiv extremen Bedingungen unterworfen ist, und den Vergleich zwischen dieser kumulierten Zeitspanne und der minimalen Dauer und das Senden eines Signals, wenn die kumulierte Zeitspanne einen vordefinierten Anteil der minimalen Dauer überschreitet, umfasst.

6. Verfahren nach Anspruch 5, **dadurch gekennzeichnet, dass** das Signal den Betrieb des organischen Elements in einem Notbetriebsmodus aktiviert, der einen Betrieb unter extremen Bedingungen sperrt.
